# EUROPÄISCHE PATENTANMELDUNG

(11) **EP 3 795 392 A1**
(43) Veröffentlichungstag der Anmeldung: **24.03.2021**
(21) Anmeldenummer: 19197763.6
(22) Anmeldetag: 17.09.2019
(51) Int. Cl.: B60J 7/00, B60J 7/047, B60J 7/16, B62H 3/08

(54) **KABINENVORRICHTUNG FÜR EIN KRAFTFAHRZEUG**

(71) Anmelder: MAGNA STEYR Fahrzeugtechnik AG & Co KG, 8041 Graz (AT)
(72) Erfinder: ZACHNEGGER, Harald, 8041 Graz (AT)
(74) Vertreter: Zangger, Bernd

(57) **Zusammenfassung**

Eine Kabinenvorrichtung für ein Kraftfahrzeug, umfassend ein festes, im Wesentlichen rechteckiges Dachteil (1), das einen Abschnitt des Daches (2) des Kraftfahrzeuges bildet, ein Scharnier (3) zur schwenkbaren Lagerung des Dachteils (1) an der Vorderkante des Dachteils (1), so dass das Dachteil (1) von einer Normalstellung, in welcher das Dachteil (1) im Wesentlichen das übrige Dach (2) des Kraftfahrzeugs fortsetzt, in eine aufgeschwenkte Stellung schwenkbar ist, in der die Hinterkante des Dachteils (1) über das übrige Dach (2) erhöht ist, wobei die Kabinenvorrichtung ferner ein flexibles Abdeckelement (4) umfasst, wobei das Abdeckelement (4) zumindest in der aufgeschwenkten Stellung eine Verbindungsfläche von den Seitenkanten und von der Hinterkante des Dachteils (1) zum Kraftfahrzeug bildet, wobei das Dachteil (1) mindestens ein Schiebedachelement (14, 15) umfasst.

## Beschreibung

### Gebiet der Erfindung

Die vorliegende Erfindung betrifft eine Kabinenvorrichtung für ein Kraftfahrzeug.

### Stand der Technik

Es ist bekannt das Kraftfahrzeuge üblicherweise eine Kabine umfassen, also einen Innenraum des Kraftfahrzeuges, so dass in der Kabine Personen oder Transportgüter untergebracht werden können. Es gibt auch schon verschiedene Vorrichtungen zum Verändern, insbesondere Erweitern einer Kabine, beispielsweise zum Vergrößern eines Laderaums mittels zusätzlicher Elemente, wie entfernbarer oder schwenkbarer Wände oder Ladeböden.

Es ist auch bereits bekannt das Dächer von Kraftfahrzeugen größere Dachelemente umfassen können, die beispielsweise transparent ausgebildet sein können und/oder die aufschiebbar sind, um frische Luft in den Fahrzeuginnenraum gelangen zu lassen. Solche größeren Dachelemente werden meist als Panoramadächer bezeichnet.

### Zusammenfassung der Erfindung

Es ist eine Aufgabe der Erfindung, eine Kabinenvorrichtung für ein Kraftfahrzeug anzugeben, die ein komfortables Mitnehmen eines großen Gegenstandes, beispielsweise eines Fahrrades, im Innenraum des Kraftfahrzeugs ermöglicht und dabei nur geringe Beschränkungen für andere Nutzungen des Innenraums darstellt.

Die Lösung der Aufgabe erfolgt durch eine Kabinenvorrichtung für ein Kraftfahrzeug, umfassend ein festes, im Wesentlichen rechteckiges Dachteil, das einen Abschnitt des Daches des Kraftfahrzeuges bildet, ein Scharnier zur schwenkbaren Lagerung des Dachteils an der Vorderkante des Dachteils, so dass das Dachteil von einer Normalstellung, in welcher das Dachteil im Wesentlichen das übrige Dach des Kraftfahrzeugs fortsetzt, in eine aufgeschwenkte Stellung schwenkbar ist, in der die Hinterkante des Dachteils über das übrige Dach erhöht ist, wobei die Kabinenvorrichtung ferner ein flexibles Abdeckelement umfasst, wobei das Abdeckelement zumindest in der aufgeschwenkten Stellung eine Verbindungsfläche von den Seitenkanten und von der Hinterkante des Dachteils zum Kraftfahrzeug bildet, wobei das Dachteil zumindest ein Schiebedachelement umfasst.

Erfindungsgemäß umfasst eine Kabinenvorrichtung ein verstellbares Dachteil, dass zwischen einer abgesenkten Normalstellung und einer gehobenen aufgeschwenkten Stellung verschwenkbar ist. Das Dachteil ist seitlich und an der Hinterkante durch ein flexibles Element mit dem Kraftfahrzeug verbunden, so dass das flexible Element in der aufgeschwenkten Stellung eine seitliche Begrenzung bildet und in der Normalstellung des Dachteils nicht entfernt werden muss. Das flexible Element kann insbesondere ein Faltenbalg sein oder ein Textil. Zusätzlich verfügt das über das Scharnier aufschwenkbare Dachteil über mindestens ein Schiebedachelement. Zusätzlich zum Aufstellen des Dachteils kann hierdurch erfindungsgemäß der zum Verstauen eines Gegenstandes verfügbare Stauraum noch weiter vergrößert werden indem der Benutzer des Kraftfahrzeuges bzw. der Kabinenvorrichtung das Schiebedachelement aufschiebt.

Hierdurch können Teile eines mitgeführten großen Gegenstandes ins Freie ausgelagert werden, beispielsweise Rohre oder Stangen, wie zum Beispiel die eines Fahrrades. Durch die erfindungsgemäße Verwendung eines sowohl aufschwenkbaren als auch abschnittsweise aufschiebbaren Dachteils kann der zur Verfügung stehende Laderaum besonders stark vergrößert werden, sodass das komfortable Mitnehmen eines großen Gegenstandes, beispielsweise eines Fahrrades, im Innenraum des Kraftfahrzeugs ermöglicht wird.

Die Bezeichnungen "vorne", "seitlich", "hinten", "oben" und "unten" beziehen sich in dieser Schrift auf die gewöhnliche Einbaulage der Kabinenvorrichtung in einem Kraftfahrzeug und auf die üblichen Fahrzeugrichtungen, so dass zum Beispiel "vorne" die übliche Vorwärtsrichtung des Fahrzeugs bezeichnet.

Weiterbildungen der Erfindung sind in den abhängigen Ansprüchen, der Beschreibung sowie den beigefügten Zeichnungen angegeben.

Bevorzugt ist das Schiebedachelement durch Verschieben in Fahrtrichtung nach vorne und/oder nach hinten öffenbar.

Besonders bevorzugt umfasst das Dachteil zwei separat öffenbare Schiebedachelemente, die vorzugsweise in Fahrtrichtung vorne und hinten angeordnet sind und vorzugsweise auch nach vorne und/oder nach hinten öffenbar und verschließbar sind. Die zwei Schiebdachelemente können bevorzugt unabhängig voneinander geöffnet und geschlossen werden. Insbesondere können die zwei Schiebdachelemente in unterschiedlichen Höhen aufschiebbar sein, so dass beide Schiebedachelemente übereinander geschoben werden können zum gleichzeitigen Öffnen beider Schiebedachelemente. Der Benutzer des Kraftfahrzeuges kann dann wählen, ob er den erweiterten Stauraum, nämlich die Öffnung nach draußen, im vorderen oder hinteren Teil des Dachteils 1 haben möchte.

Vorzugsweise umfasst die Kabinenvorrichtung zumindest eine Fahrradhalterung in der Nähe des Dachteils.

Das Dachteil umfasst bevorzugt einen Dachteilrahmen, der mit dem Dachteil aufschwenkbar ist. Am Dachteilrahmen können beispielsweise Befestigungsmittel für das Dachteil montiert sein, das Scharnier und/oder das flexible Element.

Vorzugsweise umfasst die Kabinenvorrichtung einen Dachrahmen, wobei der Dachrahmen in das übrige Dach des Kraftfahrzeuges einbaubar ist. Das Dachteil und gegebenenfalls der mitschwenkende Dachteilrahmen sind im Dachrahmen aufgenommen. Der Dachrahmen schwenkt nicht mit dem Dachteil hoch, sondern ist mit dem Fahrzeug bzw. dessen Karosserie fest verbunden. Befestigungsmittel für das Dachteil, das Scharnier und/oder das flexible Element können fahrzeugseitig mit dem Dachrahmen verbunden sein. Der Dachrahmen kann einen Träger für die gesamte Kabinenvorrichtung bilden. Durch die Verwendung eines Dachrahmens kann eine erfindungsgemäße Kabinenvorrichtung auf einfache Weise in ein Fahrzeug bzw. in eine Dachöffnung eines Fahrzeuges eingebaut werden. Montagezeiten und Montagekosten können hierdurch verringert werden.

Vorzugsweise umfasst die Kabinenvorrichtung zumindest eine um das Dachteil umlaufende Dichtung, bevorzugt ausgebildet am Dachrahmen, so dass die Dichtung nicht mit dem Dachteil mit-aufgeschwenkt wird.

Vorzugsweise umfasst die Kabinenvorrichtung zumindest einen Wasserkanal im Bereich einer Seitenkante oder Hinterkante des Dachteils, bevorzugt ausgebildet am Dachrahmen. Die umlaufende Dichtung kann bevorzugt zumindest abschnittsweise an einem Wasserkanal befestigt sein.

Bevorzugt umfasst die Kabinenvorrichtung zumindest ein Hebelelement, das beispielsweise mehrere Hebelarme umfassen kann, wobei das Hebelelement das Dachteil in der Nähe der Hinterkante des Dachteils mit dem Kraftfahrzeug verbindet, um das Dachteil in der aufgeschwenkten Stellung zu stützen.

Bevorzugt umfasst die Kabinenvorrichtung zumindest eine Gasdruckfeder, zum erleichterten Aufschwenken des Dachteils.

Bevorzugt umfasst die Kabinenvorrichtung einen Boden der Kabinenvorrichtung, wobei der Boden zumindest einen Kanal zur Aufnahme eines vertikal in den Kanal eingesteckten Rades aufweist, so dass in der aufgeschwenkten Stellung des Dachteils ein Fahrrad vertikal zwischen Dachteil und Boden in der Kabinenvorrichtung aufgenommen werden kann, wobei ein Rad des Fahrrads im Kanal stabilisiert ist. In dieser Ausbildung der Erfindung ist in einem Boden der Kabinenvorrichtung zumindest ein Kanal angeordnet. Der Kanal kann durch eine längliche Vertiefung im Boden oder durch eine kanalförmige längliche Erhöhung, beispielsweise einen U-förmigen Kanal, gebildet sein. In den Kanal kann ein Rad eines Fahrrades aufgenommen werden, so dass das Fahrrad in der Kabine des Fahrzeugs im unteren Bereich durch den Kanal gestützt ist. Im oberen Bereich des Fahrrades kann dieses in der Nähe des Dachteils, insbesondere an der Kabinenvorrichtung, abgestützt sein.

### Kurzbeschreibung der Zeichnungen

Die Erfindung wird im Folgenden beispielhaft unter Bezugnahme auf die Zeichnungen beschrieben.
- Fig. 1: ist eine schematische Darstellung eines Kraftfahrzeuges mit einer erfindungsgemäßen Kabinenvorrichtung von der Seite.
- Fig. 2: ist eine schematische Darstellung des Kraftfahrzeuges mit erfindungsgemäßer Kabinenvorrichtung gemäß Fig. 1 von hinten.
- Fig. 3: ist eine dreidimensionale schematische Darstellung eines Dachteils eines Kraftfahrzeuges gemäß Fig. 1.
- Fig. 4: ist eine dreidimensionale schematische Darstellung eines weiteren Dachteils eines Kraftfahrzeuges gemäß Fig. 1.
- Fig. 5: ist eine ausschnittweise Schnittdarstellung eines Dachteils gemäß Fig. 4 in einem Kraftfahrzeug, entsprechend Schnitt A-A der Fig. 4.
- Fig. 6: ist eine ausschnittweise Schnittdarstellung eines Dachteils gemäß Fig. 5, jedoch in einem hochgeschwenkten Zustand des Dachteils.

### Detaillierte Beschreibung der Erfindung

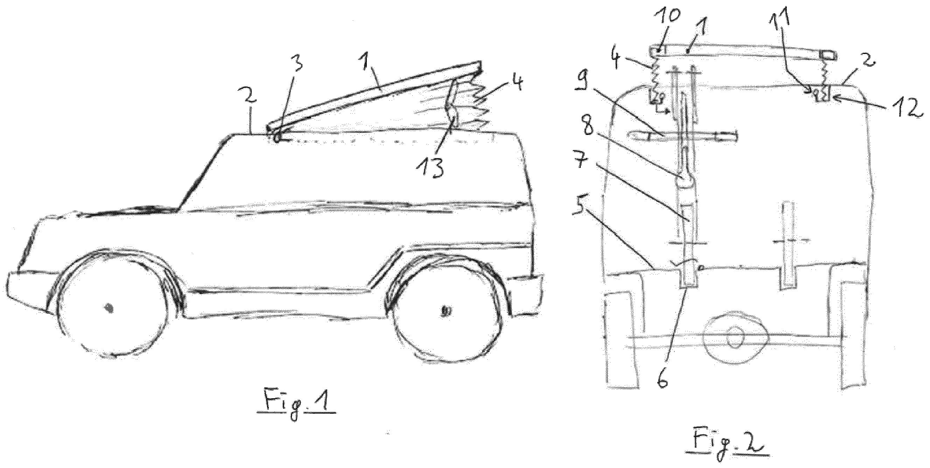

In den Fig. 1 und 2 ist ein Kraftfahrzeug mit einer erfindungsgemäßen Kabinenvorrichtung in einer seitlichen Ansicht und in einer Ansicht von hinten dargestellt.

Die Kabinenvorrichtung umfasst ein festes, im Wesentlichen rechteckiges Dachteil 1, das einen Abschnitt des Daches 2 des Kraftfahrzeuges bildet. Das Dachteil 1 ist mittels eines oder bevorzugt mehrerer Scharniere 3 an einer in Fahrtrichtung des Kraftfahrzeuges vorne liegenden Kante des Dachteils 1 am Kraftfahrzeug, insbesondere an der Karosserie, oder an einem am Kraftfahrzeug befestigten Dachrahmen der Kabinenvorrichtung schwenkbar gelagert.

Das Dachteil 1 kann daher von einer Normalstellung, in welcher das Dachteil 1 im Wesentlichen das übrige Dach 2 des Kraftfahrzeugs fortsetzt, in eine aufgeschwenkte Stellung geschwenkt werden, in der die Hinterkante des Dachteils 1 über das übrige Dach 2 erhöht ist, wie in den Fig. 1 und 2 dargestellt.

Die Kabinenvorrichtung umfasst ferner ein flexibles Abdeckelement 4, insbesondere einen Faltenbalg oder ein Textil, wobei das Abdeckelement 4 zumindest in der aufgeschwenkten Stellung eine Verbindungsfläche von den Seitenkanten und von der Hinterkante des Dachteils 1 zum Kraftfahrzeug bildet. Das Abdeckelement 4 ist permanent mit dem Dachteil 1 und mit dem Kraftfahrzeug bzw. einem damit verbundenen Dachrahmen verbunden. Die Kabinenvorrichtung umfasst auch einen Boden 5, wobei der Boden 5 zumindest einen Kanal 6 zur Aufnahme eines vertikal in den Kanal 6 eingesteckten Rades 7 aufweist, so dass in der aufgeschwenkten Stellung des Dachteils 1 ein Fahrrad 8 vertikal zwischen Dachteil 1 und Boden 5 in der Kabinenvorrichtung aufgenommen werden kann, wobei das Rad 7 des Fahrrads 8 im Kanal 6 stabilisiert ist. Das aufgenommene Fahrrad 8 wird dabei entweder gar nicht zerlegt, ist also komplett in der Kabinenvorrichtung aufgenommen, oder es wird beispielsweise lediglich das Vorderrad des Fahrrads 8 abgenommen. Das Hinterrad des Fahrrads 8 bildet bevorzugt das im Kanal 6 stabilisierte Rad 7.

Die Kabinenvorrichtung umfasst auch zumindest eine Fahrradhalterung 9 in der Nähe des Dachteils 1. Die Fahrradhalterung 9 dient somit der Befestigung des Fahrrads 8 an der dem Rad 7 entgegengesetzten Seite, insbesondere im Bereich des Vorderrads oder einer Gabel vorne am Fahrrad 8.

Das Dachteil 1 umfasst einen Dachteilrahmen 10, der mit dem Dachteil 1 aufschwenkbar ist.

Das Dachteil 1 ist zusammen mit seinem Dachteilrahmen 10 in einem Dachrahmen befestigt und in Bezug auf diesen Dachrahmen aufschwenkbar. Der Dachrahmen ist in das übrige Dach 2 des Kraftfahrzeuges eingebaut.

Das Dachteil 1 kann eine Öffnung mit einem Schiebedachelement umfassen.

Die Kabinenvorrichtung umfasst zumindest einen Wasserkanal 12 im Bereich der linken und rechten Seitenkante des Dachteils 1, der beispielsweise ein Teil des Dachrahmens der Kabinenvorrichtung sein kann.

Die Kabinenvorrichtung umfasst auch eine um das Dachteil 1 umlaufende Dichtung 11, die ebenfalls am Dachrahmen ausgebildet sein kann, insbesondere an den Wasserkanälen 12.

Die Kabinenvorrichtung umfasst auch zwei seitliche Hebelelemente 13, beispielsweise Kniehebel, die das Dachteil 1 in der Nähe der Hinterkante des Dachteils 1 mit dem Kraftfahrzeug verbinden, um das Dachteil 1 in der aufgeschwenkten Stellung zu stützen.

Die Kabinenvorrichtung kann auch eine Gasdruckfeder umfassen, die das Aufschwenken des Dachteils 1 erleichtert.

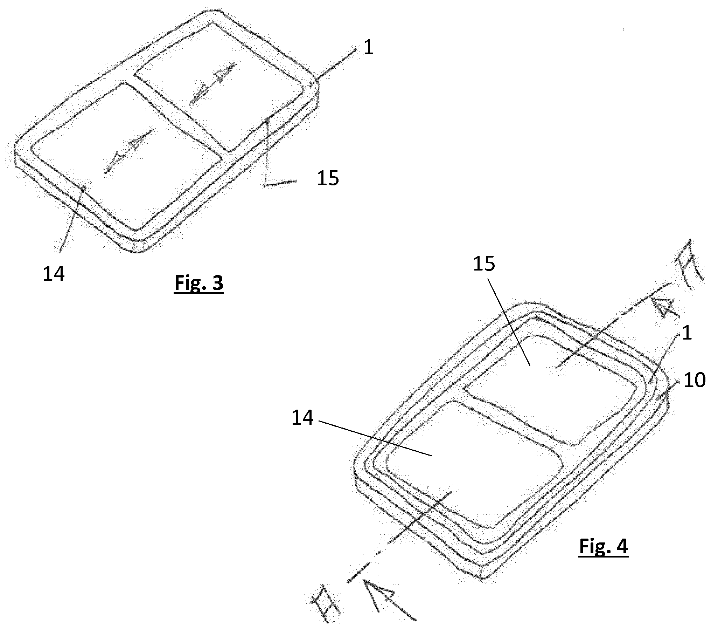

Fig. 3 zeigt eine dreidimensionale schematische Darstellung eines Dachteils 1 eines Kraftfahrzeuges gemäß Fig. 1. Das Dachteil 1 umfasst zwei Schiebedachelemente, nämlich ein vorderes Schiebedachelement 14 und ein hinteres Schiebedachelement 15.

Jedes der Schiebedachelemente 14, 15 ist durch Verschieben in Fahrtrichtung nach vorne und/oder nach hinten öffenbar bzw. schließbar, wie durch die Pfeile in Fig. 3 angedeutet.

Die zwei Schiebdachelemente 14, 15 sind in unterschiedlichen Höhen aufschiebbar, so dass die beiden Schiebedachelemente 14, 15 übereinander geschoben werden können zum gleichzeitigen Öffnen beider Schiebedachelemente 14, 15. Insbesondere kann das in Fahrtrichtung vordere Schiebdachelement 14 nach hinten geöffnet werden und das hintere Schiebdachelement 15 nach vorne geöffnet werden. Wenn die beiden Schiebdachelemente 14, 15 in unterschiedlichen Höhen angeordnet sind, können die beiden Schiebdachelemente 14, 15 trotzdem gleichzeitig geöffnet werden.

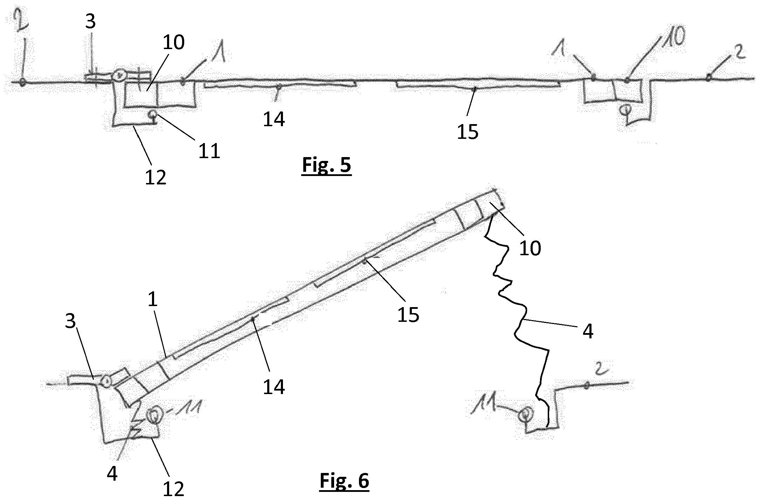

Wie in Fig. 4 ersichtlich, kann das aufschwenkbare Dachteil 1 einen Dachteilrahmen 10 umfassen, der mit dem Dachteil 1 aufschwenkbar ist. In Fig. 4 ist auch die Ebene eines Schnittes A-A eingezeichnet, der in den Fig. 5 (entsprechend Fig. 4 bei geschlossenem Dachteil 1) und Fig. 6 (bei aufgeschwenktem Dachteil 1) dargestellt ist.

Fig. 5 zeigt wieder ein Dachteil 1 mit einem außen umlaufenen Dachteilrahmen 10. Der Dachteilrahmen 10 ist mittels zweier Scharniere 3 am Dach 2 des Kraftfahrzeuges befestigt. Der Dachteilrahmen 10 liegt im geschlossenen Zustand auf einer umlaufenden Dichtung 11 auf, die das Ende eines Wasserkanals 12 bilden kann. Wie in Fig. 6 ersichtlich, kann das flexible Abdeckelement 4, das eine Verbindungsfläche von den Seitenkanten und von der Hinterkante und bevorzugt auch von der Vorderkante des Dachteils 1 zum Kraftfahrzeug bildet, den Dachteilrahmen 10 mit dem Wasserkanal 12 verbinden.

Die Schiebedachelemente 14 und 15 sind auch im hochgeschwenkten Zustand des Dachteils 1 - wie in Fig. 6 dargestellt - aufschiebbar, um zusätzlichen Stauraum für sperriges Ladegut zu schaffen.

### Bezugszeichenliste

- 1: Dachteil
- 2: Dach
- 3: Scharnier
- 4: flexibles Abdeckelement
- 5: Boden
- 6: Kanal
- 7: Rad
- 8: Fahrrad
- 9: Fahrradhalterung
- 10: Dachteilrahmen
- 11: Dichtung
- 12: Wasserkanal
- 13: Hebelelement
- 14: Schiebedachelement
- 15: Schiebedachelement

## Patentansprüche

1. Kabinenvorrichtung für ein Kraftfahrzeug, umfassend ein festes, im Wesentlichen rechteckiges Dachteil (1), das einen Abschnitt des Daches (2) des Kraftfahrzeuges bildet, ein Scharnier (3) zur schwenkbaren Lagerung des Dachteils (1) an der Vorderkante des Dachteils (1), so dass das Dachteil (1) von einer Normalstellung, in welcher das Dachteil (1) im Wesentlichen das übrige Dach (2) des Kraftfahrzeugs fortsetzt, in eine aufgeschwenkte Stellung schwenkbar ist, in der die Hinterkante des Dachteils (1) über das übrige Dach (2) erhöht ist, wobei die Kabinenvorrichtung ferner ein flexibles Abdeckelement (4) umfasst, wobei das Abdeckelement (4) zumindest in der aufgeschwenkten Stellung eine Verbindungsfläche von den Seitenkanten und von der Hinterkante des Dachteils (1) zum Kraftfahrzeug bildet,
**dadurch gekennzeichnet, dass** das Dachteil (1) mindestens ein Schiebedachelement (14, 15) umfasst.

2. Kabinenvorrichtung nach Anspruch 1,
**dadurch gekennzeichnet, dass** das Schiebedachelement (14, 15) durch Verschieben in Fahrtrichtung nach vorne und/oder nach hinten öffenbar ist.

3. Kabinenvorrichtung nach zumindest einem der vorhergehenden Ansprüche,
**dadurch gekennzeichnet, dass** das Dachteil (1) zwei separat öffenbare Schiebedachelemente (14, 15) umfasst, wobei die zwei Schiebdachelemente (14, 15) bevorzugt in unterschiedlichen Höhen aufschiebbar sind, so dass die beiden Schiebedachelemente (14, 15) übereinander geschoben werden können zum gleichzeitigen Öffnen beider Schiebedachelemente (14, 15).

4. Kabinenvorrichtung nach zumindest einem der vorhergehenden Ansprüche,
**dadurch gekennzeichnet, dass** die Kabinenvorrichtung zumindest eine Fahrradhalterung (9) in der Nähe des Dachteils (1) umfasst.

5. Kabinenvorrichtung nach zumindest einem der vorhergehenden Ansprüche,
**dadurch gekennzeichnet, dass** das Dachteil (1) einen Dachteilrahmen (10) umfasst, der mit dem Dachteil (1) aufschwenkbar ist.

6. Kabinenvorrichtung nach zumindest einem der vorhergehenden Ansprüche,
**dadurch gekennzeichnet, dass** die Kabinenvorrichtung einen Dachrahmen umfasst, wobei der Dachrahmen in das übrige Dach (2) des Kraftfahrzeuges einbaubar ist, wobei das Dachteil (1) und gegebenenfalls der Dachteilrahmen (10) im Dachrahmen aufgenommen ist, wobei der Dachrahmen nicht mit dem Dachteil (1) aufschwenkbar ist.

7. Kabinenvorrichtung nach zumindest einem der vorhergehenden Ansprüche,
**dadurch gekennzeichnet, dass** die Kabinenvorrichtung zumindest eine um das Dachteil (1) umlaufende Dichtung (11) umfasst und/oder zumindest einen Wasserkanal (12) im Bereich einer Seitenkante oder Hinterkante des Dachteils (1).

8. Kabinenvorrichtung nach zumindest einem der vorhergehenden Ansprüche,
**dadurch gekennzeichnet, dass** die Kabinenvorrichtung zumindest ein Hebelelement (13) umfasst, wobei das Hebelelement (13) das Dachteil (1) in der Nähe der Hinterkante des Dachteils (1) mit dem Kraftfahrzeug verbindet, um das Dachteil (1) in der aufgeschwenkten Stellung zu stützen.

9. Kabinenvorrichtung nach zumindest einem der vorhergehenden Ansprüche,
**dadurch gekennzeichnet, dass** die Kabinenvorrichtung zumindest eine Gasdruckfeder umfasst, zum erleichterten Aufschwenken des Dachteils (1).

10. Kabinenvorrichtung nach zumindest einem der vorhergehenden Ansprüche,
**dadurch gekennzeichnet, dass** die Kabinenvorrichtung einen Boden (5) der Kabinenvorrichtung umfasst, wobei der Boden (5) zumindest einen Kanal (6) zur Aufnahme eines vertikal in den Kanal (6) eingesteckten Rades (7) aufweist, so dass in der aufgeschwenkten Stellung des Dachteils (1) ein Fahrrad (8) vertikal zwischen Dachteil (1) und Boden (5) in der Kabinenvorrichtung aufgenommen werden kann, wobei das Rad (7) des Fahrrads (8) im Kanal (6) stabilisiert ist.
